Europäisches Patentamt

(19) European Patent Office

Office européen des brevets

(11) Publication number: **0 030 455**
A1

## (12) EUROPEAN PATENT APPLICATION

(21) Application number: **80304368.6**

(22) Date of filing: **03.12.80**

(51) Int. Cl.³: **F 16 F  9/48,** F 16 F  9/34

(30) Priority: **04.12.79  GB 7941856**

(71) Applicant: **Jonas Woodhead Limited, 177 Kirkstall Road, Leeds Yorkshire LS4 2AQ (GB)**

(43) Date of publication of application: **17.06.81**
**Bulletin 81/24**

(72) Inventor: **Duckett, William Arthur, 203 Kingsway, Ossett Yorkshire (GB)**
Inventor: **Eckersley, John Stanely, 65 Calverley Moor Avenue, Pudsey West Yorkshire LS28 9EL (GB)**

(74) Representative: **Robinson, Anthony John Metcalf et al, Kilburn & Strode 30 John Street, London, WC1N 2DD (GB)**

(84) Designated Contracting States: **AT CH DE LI NL SE**

(54) **Displacement conscious dampers.**

(57)  A damper has a pressurized gas reservoir 13a, a piston 24 having rebound 29 and compression 27 valves and a bypass passage afforded by an annular space 14 between the working cylinder 12 and an outer cylinder 11. The bypass passage is connected to the space 13b below the piston by a port 31 which is passed by the piston on its compression travel and to the space 13c surrounding the piston rod 17 by ports 32 which are successively passed by the piston on its rebound travel. There is also described a two-tube version having a chamber 52 surrounding the annular bypass and connected to the space below the piston by an unvalved passage 52 offering negligible resistance to flow.

ACTORUM AG

EP 0 030 455 A1

1.

## DISPLACEMENT CONSCIOUS DAMPERS

This invention relates to displacement conscious vibration dampers and particularly, but not exclusively relates to shock absorbers for road vehicle suspensions.

According to one aspect of the present invention, a pressurized hydraulic damper comprises a cylinder, a piston in the cylinder, a piston rod connected to the piston and extending out of one end of the cylinder, longitudinally spaced ports extending through the cylinder, bypass passage means interconnecting the ports, the ports being positioned so that at least one is obturated by the piston during movement of the piston in its working stroke to vary the flow resistance from one side of the piston to the other as the position of the piston in its stroke varies, and valves in the piston or in the bypass or in both the piston and the bypass, these valves constituting the only damping valves of the damper. The invention is particularly applicable to dampers in which the pressurisation is achieved by gas under pressure, either with the gas in direct contact with the hydraulic fluid or separated therefrom by a movable wall such as a floating piston but the pressurisation could alternatively be achieved by a movable wall such as a floating piston acted on by a mechanical spring.

A damping valve is a variable damping orifice. It is usually used either alone or in combination with other damping valve(s) and/or non-variable damping orifice(s) to produce a predetermined pressure to flow

2.

relationship that is different to the inherent relationship for a non-variable damping orifice. A damping orifice allows but restricts flow of fluid for the purpose of diminishing, by conversion into heat, some at least of the pressure and kinetic energy in the fluid so as to control the movement of, and/or forces generated in, a device the movement of which causes the fluid flow.

The damper of the invention may be considered as having only two hydraulic fluid volumes which are connected by not more than two groups of flow paths, one group through or around the piston (i.e. the piston compression and rebound valves and any

0030455

3.

bleed paths there may be through or around the piston)
and another bypassing at least a part of the working
cylinder which can be entered by the piston.  In
the preferred construction the bypass passage is
unvalved and then, for any given piston position, the
bypass affects flow during both compression and
rebound substantially equally although the hydraulic
resistance/velocity characteristics will be
different at different piston positions.  This is not
the case with the damper described in British Patent
Specification No. 1 125 104 in which there is a
reservoir connected to one of the cylinder chambers
through a base valve assembly providing separate
valves for flow into and flow out of the reservoir.
The bypass circuit in this construction will always
have a greater relative effect on the rebound characteristic of the damper than on compression;  the base
valve must provide a sufficiently high resistance to
ensure filling of the working cylinder on the piston
rod side of the piston in all positions of operation,
i.e. including those in which resistance to flow from
below to above the piston through and around the piston
and through the bypass circuit is maximal.

As mentioned above, the damper of the invention
may be considered as having only two hydraulic fluid
volumes which are connected by two groups of flow
paths.  Each of these volumes will be constituted, at
least partly, by space in the cylinder lying on one
side or the other of the piston but may be supplemented
by space lying outside the cylinder and connected to the space lying inside the cylinder by passage means without valves. Such an external space may be provided by an annular chamber surrounding the cylinder. However, there may be no external space and, according to a second aspect of the invention, a hydraulic damper comprises an inner cylinder, an outer cylinder surrounding the inner cylinder and providing the outside surface of the damper, an annular chamber bounded by the outside of the inner cylinder and the inside of the outer cylinder, a piston in the inner cylinder and having compression and rebound valves to allow but restrict flow through the piston, a piston rod connected to the piston and extending out of one end of the cylinder, a floating piston in the inner cylinder adjacent the other end of the inner cylinder, a pressurized gas charge in the inner cylinder on the side of the floating piston remote from the valved piston, and longitudinally spaced ports extending through the inner cylinder and so positioned that at least one is obturated by the valved piston during movement of the piston in its working stroke to vary the resistance to flow from one side of the valved piston to the other through the annular chamber during movement of the valved piston in its working stroke.

The invention may be carried into practice in various ways but two dampers, both vehicle suspension shock absorbers, embodying the invention will now be described by way of example with reference to the accompanying drawings, in which:

Figure 1 is a diagrammatic longitudinal section through the first damper;

Figure 2a is a simplified representation of the damper shown in Figure 1 with the piston in the mid position;

Figure 2b is a graph showing hydraulic resistance plotted against velocity for movement of the piston when the piston is in the position shown in Figure 2a;

Figures 3a and 3b are similar to Figures 2a and 2b respectively with the damper almost fully compressed;

Figures 4a and 4b are similar views with the damper almost fully extended;

Figure 5 is a diagrammatic longitudinal section through the second damper, and

Figure 6 is a partial diagrammatic longitudinal section through a damper showing a valved by-pass passage.

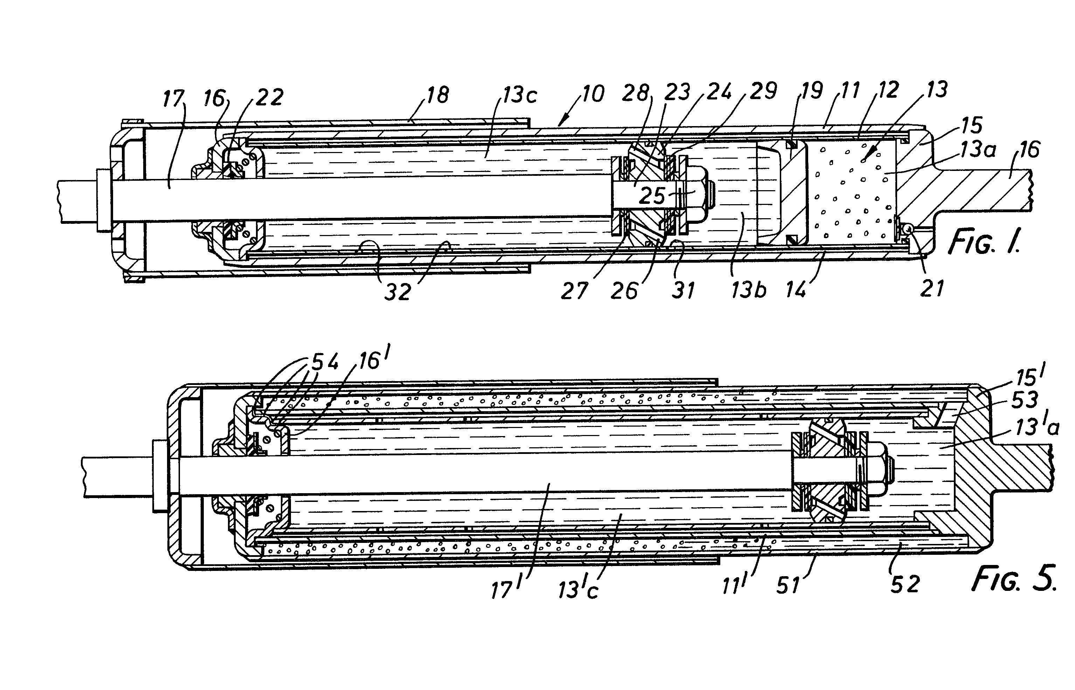

Referring firstly to Figure 1, the damper 10 comprises an outer cylinder 11 and an inner cylinder 12 providing a cylinder chamber 13 and an annular chamber 14 which are closed at one end by an end fitting 15 having attachment means 16 for attachment of the damper to either the sprung or unsprung mass of a vehicle and at the other end by an end fitting 16 constituting a guide for a piston rod 17 the outer end of which has attachment means (not shown) for attachment of the damper to the unsprung or sprung mass of the vehicle. The piston rod 17 carries a dust cover 18. The cylinder chamber 13 is divided by a floating piston 19 into a gas space 13a on the side adjacent the end fitting 15 and an oil space on the

other side. Oil (hydraulic fluid) is introduced into the oil space before the floating piston 19 and end fitting 15 are fitted. Pressurized gas is then admitted to the gas space through a check valve 21.

The inner end of the piston rod 17 is formed with a spigot 23 on which a piston 24 is secured by a nut 25. The piston divides the oil space into a first chamber 13b remote from the piston rod and a second chamber 13c surrounding the piston rod. The piston is formed with a first ring of passages 26 which lead from the first to the second chamber and are closed by a compression valve 27 constituted by a stack of spring washers. The piston is also formed with a second ring of passages 28 which lead from the second to the first chamber and are closed by a rebound valve 29 also constituted by a stack of spring washers. Either or both stacks may have small bleed notches as is conventional.

The annular chamber 14 between the inner and outer cylinders constitutes a bypass passage around the piston 24 and it is connected to the oil space by a first port 31 normally open to the first oil chamber 13b and a series of axially spaced second ports 32 (in this case two ports) normally open to the second oil chamber 13a.

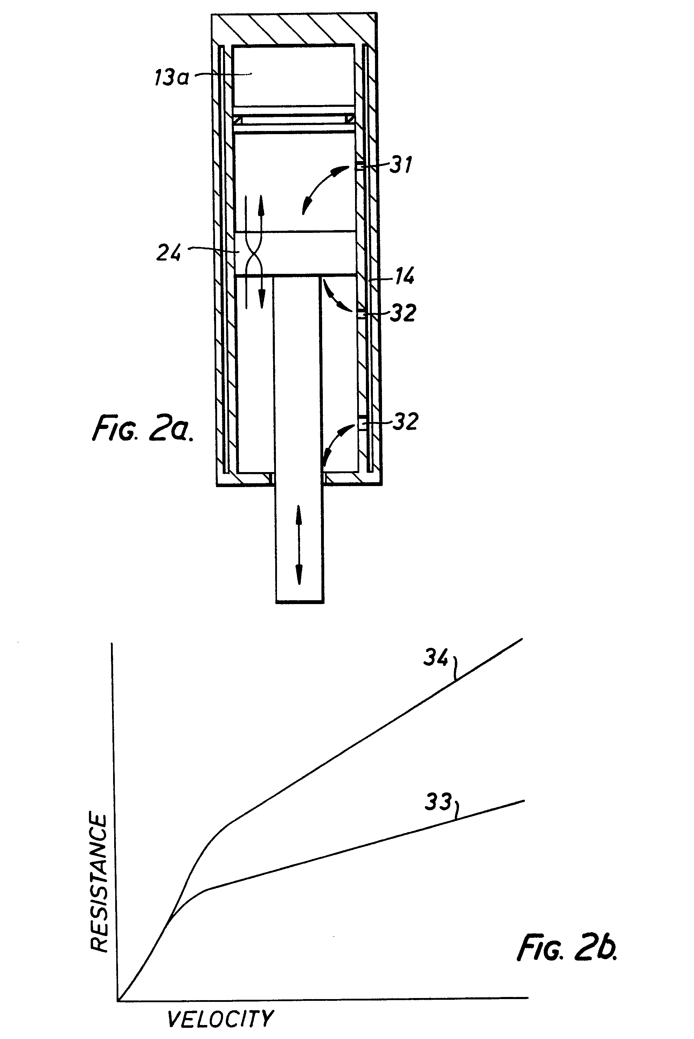

Operation of the damper shown in Figure 1 will now be described with reference to Figures 2a, 2b, 3a, 3b, 4a and 4b. It should be noted that the gas chamber 13a (which is filled with nitrogen at a pressure

7.

of between 10 and 30 bars depending on the damping value of the compression resistance requirement for the vehicle to which the damper is fitted varies in volume by movement of the piston 19 in the cylinder to accommodate piston rod volume but the piston 19 never moves into the cylinder chamber as far as the first port 31. The graphs 2b, 3b, 4b show only dynamically generated hydraulic resistance forces which on the compression stroke are reacted by gas pressure and ignore static forces produced by the gas pressure.

It will be seen from Figure 2b that, with the piston in mid-stroke, at low velocities resistance in each direction is the same. Flow takes place through any bleeds in the piston and through the bypass passage 14 and the ports 31 and 32 which have the same flow characteristics in each direction. At higher velocities, flow occurs through the valves in the piston and as the compression ports 26 and valve 27 have a different characteristic from the rebound ports 28 and valve 29 the compression curve 33 parts company from the rebound curve 34, flow through the piston valves being added to that through the bypass 14 and bleeds.

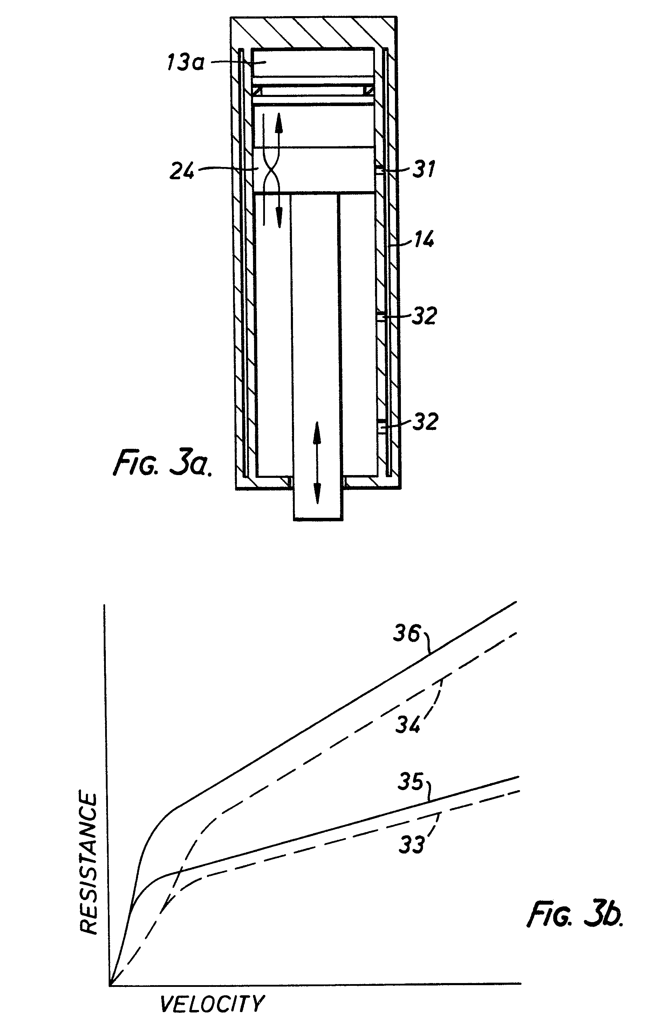

When the damper is almost fully compressed as shown in Figure 3a, the piston 24 covers the first port 31 so that on movement of the piston 24 no flow occurs through the bypass passage 14. At low velocities, flow is through the bleed passages in the piston and resistances are as indicated in the left hand portion of Figure 3b. At higher velocities, either the compression or the rebound valves in the piston will open. The rebound resistance and the compression resistance produced, and as shown in Figure 3b by curves 35 and 36 respectively, are similar to those indicated in Figure 2b but are higher because of the absence of flow through the bypass passage 14. Curves 33 and 34 from Figure 2b are indicated by dotted lines in Figure 3b to provide easy comparison.

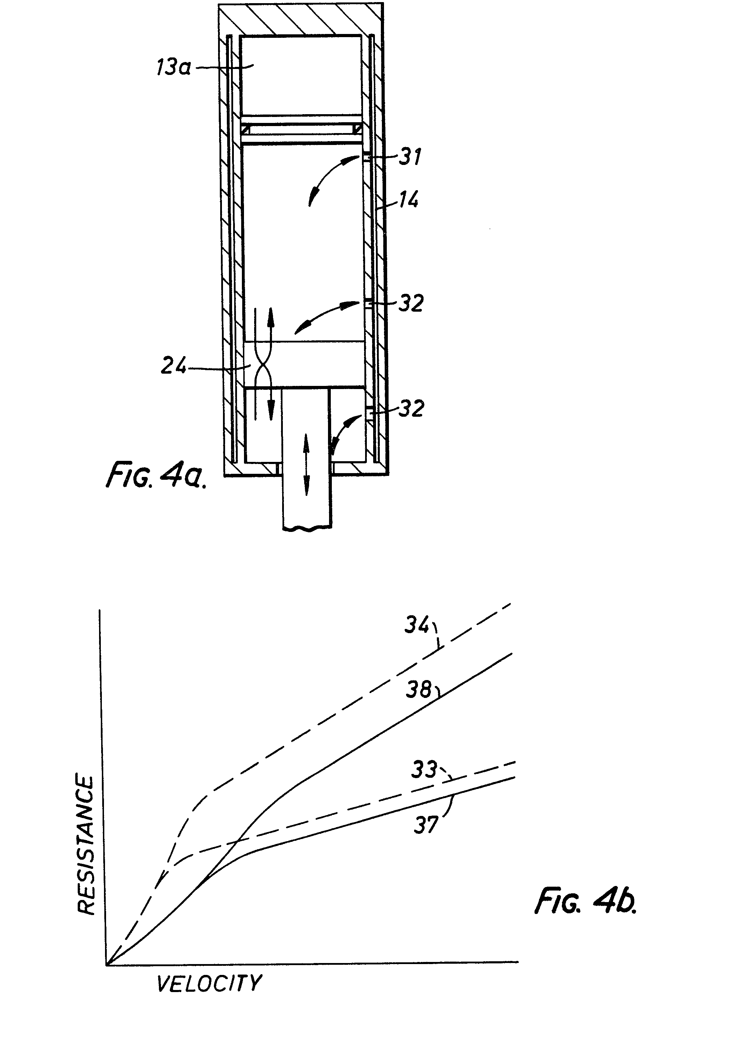

When the damper is substantially extended, as is depicted in Figure 4a, the piston 24 reaches a position where it is between the two ports 32. In this position, movement of the piston 24 will produce flow through the bypass passage 14, the resistance to this flow being less than that occurring in the position shown in Figure 2a since above the piston there is now open one of the second series of ports 32 as well as the first port 31 and the lowermost of the second series of ports 32 is of substantially greater cross-sectional area than the higher of the second series and than the first port 31. The compression and rebound characteristics are shown by the curves 37, 38 in Figure 4b and, again, the curves 33 and 34 are shown dotted for comparison.

If the piston 24 descends further to close the lowermost of the second series of ports 32, flow through the bypass passage 14 is prevented and the characteristics are substantially the same as those

9.

shown in Figure 3b, flow only occurring through the valves in the piston and through bleed passages.

Where the second series of ports consists of more than two, these will be closed successively as the piston descends to give characteristics which are intermediate between those shown in Figure 2b and those shown in Figure 4b.

It will be appreciated that the curves of Figures 2b, 3b and 4b are somewhat simplified and represent initial positions of the piston from which the finite movements producing the characteristics described are made. Although simplified, the curves show that where the compression and rebound resistances are different, i.e. at higher velocities when the valves in the piston are opened, the changes produced in them by flow through the bypass passage 14 are in the same sense. Where the compression and rebound resistances are identical, i.e. at lower velocities, they remain identical.

The damper described may be used for various purposes. One such purpose is to give increased damping as the vehicle load is increased from unladen (Figures 4a and 4b), through partly laden (Figures 2a and 2b) to fully laden (Figures 3a and 3b); this is particularly valuable where the vehicle is fitted with variable rate springs. Another purpose is to provide a progressive hydraulic compression stop.

In the damper described, the first port 31 is a small port and contributes to resistance to flow through the bypass 14 and hence to damping and the lowermost of the second ports 32 is large but in an alternative construction this arrangement is reversed.

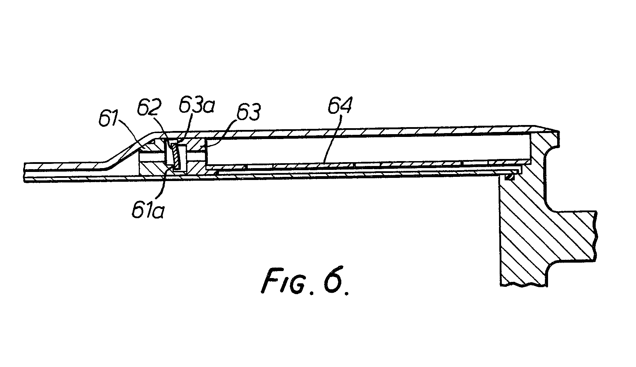

The damper shown in Figure 5 is a pressurized two tube shock absorber having many similarities with that shown in Figure 1 and similar parts will be given the same references with the addition of a prime. The outer cylinder 11' is surrounded by a tube 51 providing an annular chamber 52 which is in communication with the oil space 13'a through a bore 53 in the end fitting 15'. There is no separate gas space, the oil and gas forming some emulsion in the chamber 52. Priming notches 54 are provided in the end closure 16' through which any gas present in the oil space 13'c can be expelled into the chamber 52 during stroking of the damper. With this construction, it is necessary for the piston rod 17' to be at the top but the damper can be modified so as to be usable in any attitude by including in the chamber 52 a floating piston separating a gas space at the piston rod end of the chamber from an oil space.

The characteristics of the damper shown in Figure 5 are similar to those described for the damper shown in Figure 1.

In all the constructions described, the bypass passage is unvalved and the piston has both compression and rebound valves. However, it is in principle possible to have no valves in the piston and to have compression and rebound valves in the bypass passage or, in order to achieve a specially required characteristic, to have valves both in the piston and the bypass passage.

11.

A valved by-pass passage construction is shown in
Figure 6. The valve comprises two valve seat members 61
and 63 having corresponding valve seats 61a and 63a
a valve disc 62 serving for both compression and rebound,
and a clamping tube 64, all of which components are
generally annular. On extension movement generating
sufficient pressure, the inner periphery of the disc is
lifted from the valve seat 61a while on compression
movement, the outer periphery of the disc is lifted from
the valve seat 63a. Either or both of the valve seats
may have bleed notches (not shown) cut in them.

0030455

## CLAIMS

1. A pressurized hydraulic double-acting damper comprising a cylinder, a piston rod extending out of one end of the cylinder, a piston in the cylinder secured to one end of the piston rod and having compression and rebound valves to allow but restrict flow through the piston, longitudinally spaced ports opening to the interior of the cylinder through the inner surface of the cylinder, and rigid-walled fixed-volume bypass passage means interconnecting the ports, the ports being positioned so that at least one is obturated by the piston during movement of the piston in its working stroke to vary the flow resistance from one side of the piston to the other as the position of the piston in its stroke varies, the bypass passage means being valveless or having compression and rebound valves, the valves in the piston and in the bypass passage means if present constituting the only damping valves of the damper.

2. A damper as claimed in Claim 1 in which the bypass passage means is unvalved.

3. A damper as claimed in Claim 1 in which the piston has compression and rebound valves to allow but restrict flow through the piston.

4. A damper as claimed in Claim 1 or Claim 2 or Claim 3 which contains gas under pressure.

5. A damper as claimed in Claim 4 in which the gas is separated from the hydraulic fluid by a floating piston.

6. A damper as claimed in any of the preceding claims in which the cylinder is surrounded by an annular chamber which is connected to the cylinder space by unvalved passage means.

7. A hydraulic damper comprising an inner cylinder, an outer cylinder surrounding the inner cylinder and providing the outside surface of the damper, an annular
chamber bounded by the outside of the inner cylinder
and the inside of the outer cylinder, a piston in the inner
cylinder and having compression and rebound valves to
allow but restrict flow through the piston, a piston rod
connected to the piston and extending out of one end
of the cylinder, a floating piston in the inner cylinder
adjacent the other end of the inner cylinder, a pressurized gas charge in the inner cylinder on the side of the
floating piston remote from the valved piston, and
longitudinally spaced ports extending through the inner
cylinder and so positioned that at least one is obturated
by the valved piston during movement of the piston in its
working stroke to vary the resistance to flow from one
side of the valved piston to the other through the annular
chamber during movement of the valved piston in its work-
ing stroke.

8. A damper as claimed in Claim 7 in which when the
valved piston is adjacent its extreme compression position
none of the longitudinally spaced ports lies on the side
of the valved piston remote from the piston rod.

9. A damper as claimed in Claim 7 or Claim 8 in
which in moving from mid-stroke towards its extreme
rebound position the valved piston closes at least one of
the longitudinally spaced ports while leaving open another
nearer the said one end.

10. A damper as claimed in any preceding claim in which the
bypass passage includes a damping valve which comprises two
valve seats and a valve disc serving for both compression and
rebound.

0030455

FIG. 1.

FIG. 5.

**Fig. 2a.**

**Fig. 2b.**

Fig. 3a.

RESISTANCE

VELOCITY

Fig. 3b.

Fig. 4a.

RESISTANCE

VELOCITY

Fig. 4b.

FIG. 6.

|  | European Patent Office | EUROPEAN SEARCH REPORT | 0030455 Application number EP 80 30 4368 |

## DOCUMENTS CONSIDERED TO BE RELEVANT

| Category | Citation of document with indication, where appropriate, of relevant passages | Relevant to claim |
|---|---|---|
|  | US - A - 3 213 973 (J.J. DAMON)<br>* The whole document * | 1-3,6-9 |
|  | -- | |
|  | US - A - 3 127 958 (H.T. SZOSTAK)<br>* The whole document * | 1-3,6,7 |
|  | -- | |
| D | GB - A - 1 125 104 (BRITISH RAIL-WAY BOARD)<br>* The whole document * | 1,2,4,6,7,9 |
|  | -- | |
|  | GB - A - 1 239 667 (BRITISH RAIL-WAY BOARD)<br>* The whole document * | 1-4,6,7,9 |
|  | -- | |
|  | US - A - 3 837 445 (W.R.J. PIERLE)<br>* Column 3, line 55 - column 4, line 4; figures 1,5,6 * | 10 |
|  | -- | |
|  | FR - A - 2 344 757 (TOKICO LTD)<br>* Page 3, lines 2-5 * | 5 |
|  | -- | |
| A | GB - A - 1 229 880 (OLEO INT. HOLD. LTD.) | |
| A | GB - A - 861 162 (DE KONING) | |
| A | US - A - 3 476 354 (R.A. STUBBLE-FIELD) | |
|  | ----- | |

### CLASSIFICATION OF THE APPLICATION (Int. Cl.³)

F 16 F 9/48
9/34

### TECHNICAL FIELDS SEARCHED (Int. Cl.³)

F 16 F

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search<br>The Hague | Date of completion of the search<br>16-03-1981 | Examiner<br>CINQUANTINI |

EPO Form 1503.1   06.78